Europäisches Patentamt

European Patent Office

Office européen des brevets

(19)

(11) Numéro de publication: **0 170 564**
**B1**

(12) **FASCICULE DE BREVET EUROPEEN**

(45) Date de publication du fascicule du brevet: **14.11.90**

(51) Int. Cl.⁵: **G 01 F 1/07**

(21) Numéro de dépôt: **85401288.7**

(22) Date de dépôt: **26.06.85**

(54) **Compteur de liquide à jet unique.**

(30) Priorité: **28.06.84 FR 8410212**

(43) Date de publication de la demande:
**05.02.86 Bulletin 86/06**

(45) Mention de la délivrance du brevet:
**14.11.90 Bulletin 90/46**

(84) Etats contractants désignés:
**BE DE GB IT NL**

(56) Documents cités:
**FR-A- 496 601**
**FR-A-2 445 515**
**GB-A- 437 637**

(73) Titulaire: **SCHLUMBERGER INDUSTRIES**
**50, avenue Jean Jaurès**
**F-92120 Montrouge (FR)**

(72) Inventeur: **Marlier, Alain**
**"Le Murgier" St. Albain**
**F-71260 Lugny (FR)**
Inventeur: **Oszajca, Henri**
**53, Bd. des Neufs Clefs**
**F-71000 Macon (FR)**

(74) Mandataire: **Ritzenthaler, Jacques**
**SCHLUMBERGER INDUSTRIES CENTRE DE**
**RECHERCHE/SMR B.P. 620-05**
**F-92542 Montrouge Cedex (FR)**

Courier Press, Leamington Spa, England.

## Description

La présente invention a pour objet un compteur de liquide, notamment d'eau, du type à jet unique.

De façon plus précise la présente invention concerne un compteur de liquide de ce type présentant une sensibilité améliorée notamment pour les faibles débits d'eau.

Les compteurs d'eau peuvent être divisés en deux grandes catégories: les compteurs volumétriques, et les compteurs de vitesse. Les compteurs volumétriques par exemple les compteurs à piston rotatif, permettent d'obtenir une très bonne sensibilité pour les faibles débits, mais leur coût de fabrication est relativement élevé du fait qu'ils exigent une très grande précision d'usinage.

Les compteurs de vitesse peuvent être divisés en compteur du type woltman dans lesquels l'écoulement du liquide provoque la rotation d'une hélice dont l'axe de rotation est parallèle à la direction de circulation du liquide, et des compteurs à jet dans lesquels le liquide à mesurer entre dans une chambre de mesure perpendiculairement à l'axe de rotation d'une turbine.

Les compteurs du type woltmann sont bien adaptés au comptage de liquides circulant dans des canalisations de gros calibres (typiquement supérieures ou égaux à 80 mm) alors que les compteurs à jet sont utilisés en liaison avec des conduites de diamètres moyens ou faibles.

Parmi les compteurs à jet on peut à nouveau distinguer entre les compteurs à jet unique et les compteurs à jet multiple. Dans les compteurs à jet multiple la canalisation, d'arrivée d'eau débouche dans une chambre annulaire d'alimentation. La chambre de mesure dans laquelle est montée la turbine, est séparée de la chambre d'alimentation par une paroi cylindrique percée d'orifice. La chambre de mesure est ainsi alimentée par une pluralité de jets créés par ces orifices ces jets provoquant la rotation de la turbine. Les compteurs à jet multiple présentent une bonne sensibilité mais leur coût de fabrication est relativement élevé du fait de leur structure relativement complexe.

Dans le compteurs à jet unique la canalisation amont débouche directement dans la chambre de mesure par l'intermédiaire d'un injecteur. La structure de ces compteurs est donc beaucoup plus simple et leur coût réduit. Cependant, les compteurs de ce type présentent en général une sensibilité médiocre pour les faibles débits et ils ne peuvent être employés que comme compteurs divisionnaires en raison de leurs médiocres qualités mérologiques.

Pour tenter de remédier à cet inconvénient, c'est-à-dire pour fournir un compteur à jet unique qui ait des qualités métrologiques suffisantes pour être utilisé comme compteur de première prise, on a proposé dans le brevet français 2 336 666 d'utiliser un mode de pivotement particulier de la turbine pour limiter le couple de frottement aux faibles débits c'est-à-dire pour les faibles vitesses de rotation de la turbine. Selon ce brevet l'axe vertical de la turbine se termine à sa partir inférieure par une fine pointe et à sa partie supérieure par une butée plate.

Aux faibles débits, l'axe repose par sa fine pointe sur une pierre ce qui assure la sensibilité du fait du couple de frottement réduit. Le débit augmentant, la pointe inférieure se dégage progressivement jusqu'à un soulèvement complet de la turbine et à l'appui de la butée supérieure chargée de supporter la poussée axiale sur un pivot dimensionné à cet effet. Ce soulèvement est dû à la composante verticale de la résultante des forces appliquées à la turbine. Cette composante est favorisée par la présence de nervures radiales faisant saillie hors du fond de la chambre de mesure.

Cette solution permet certes de réduire le couple de frottement pour les faibles débits et dont d'améliorer la sensibilité de compteur dans cette plage de fonctionnement, mais elle présente l'inconvénient d'exiger la présence d'une butée supérieure robuste capable d'absorber la poussée axiale de la turbine aux vitesses de rotation élevées.

Pour tenter de remédier à cet inconvénient, le brevet GB—A—437,637 propose de munir chacune des deux parois d'extrémité de nervures radiales, la disposition, le nombre, la forme et la taille de ces nervures étant choisis de manière à décharger le pivot inférieur pour des vitesses de rotation élevées, la turbine ayant alors tendance à se soulever dans la chmbre de mesure.

Un objet de l'invention est de proposer un compteur à jet unique qui ne requiert pas nécessairement de nervures radiales et qui permet d'obtenir une bonne sensibilité en particulier aux débits réduits tout en ayant un coût de fabrication réduit compatible avec une production industrielle en grande série.

Pour atteindre ce but, l'invention fait usage de l'effet dépressionnaire qui se manifeste aux extrémités du moyeu portant la turbine lorsque la turbine est animée d'un mouvement de rotation.

Le compteur selon l'invention comprend les éléments décrits dans la revendication 1.

On voit au'ainsi on réalise une régulation de la position axiale de la turbine de telle manière que: la pointe du pivot de la turbine soit au contact de la butée pour les faibles vitesses de rotation; la turbine se soulève progressivement jusqu'à une certaine valeur lorsque la vitesse croît, et la turbine occupe une position axiale stable, sans qu'il y ait de contact avec une butée axiale, au-delà d'une vitesse donnée.

Pour améliorer encore la sensibilité du compteur pour les faibles débits, de préférence le compteur comprend de plus un ensemble de nervures rayonnantes solidaires de la première paroi d'extrémité de la chambre de mesure, lesdites nervures étant aptes à engendrer, pour les faibles débits de liquide à mesurer, des phénomènes de tourbillon dans les espaces séparant lesdites nervures, de telle manière que lesdits phénomènes tourbillonnaires créent un bouchon

EP 0 170 564 B1

hydraulique à proximité de ladite première paroi d'extrémité pour que la zone laissée libre pour un écoulément laminaire entre la turbine du compteur et ledit bouchon hydraulique ait une longueur, selon la direction dudit axe de rotation, au plus égale à la distance selon la même direction entre lesdites nervures et ladite turbine.

Ainsi, grâce à la formation de ce bouchon hydraulique la zone située en dessous des pales de la turbine dans laquelle se développe un écoulement laminaire a une longueur réduite selon la direction de l'axe de rotation de la turbine. Il en résulte un accroissement de la vitesse du liquide en régime laminaire ce qui améliore la sensibilité du compteur aux faibles débits.

D'autres caractéristiques et avantages de l'invention apparaîtront plus clairement à la lecture de la description qui suit d'un mode de réalisation de l'invention donné à titre d'exemple non limitatif. La description se réfère au dessin annexé sur lequel:

— La figure 1 est une vue de dessus d'un corps de compteur à jet unique selon l'invention;

— La figure 2 est une vue en coupe verticale du corps du compteur selon la ligne II—II de la figure 1;

— la figure 3 est une vue de l'ensemble du compteur selon la même coupe que celle de la figure 2;

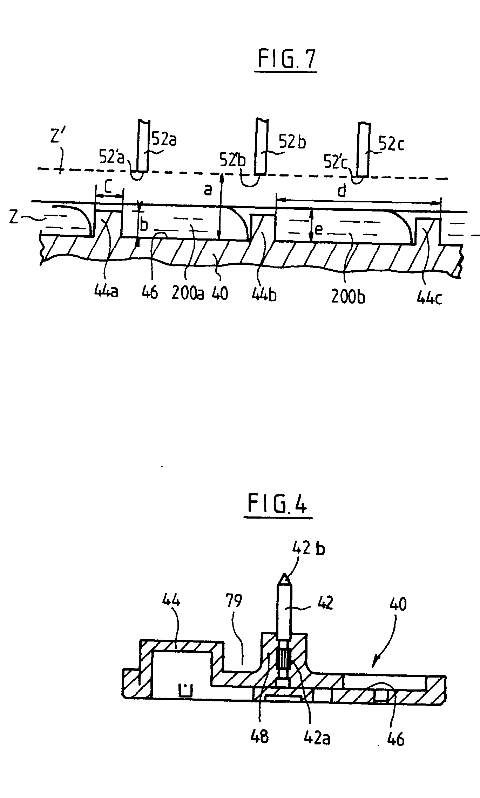

— la figure 4 est une vue partielle de la figure 2 montrant plus en détails un mode préféré de réalisation des nervures fixes inférieures du compteur; et

— La figure 5 représente un diagramme d'étalonnage d'une compteur d'eau.

— La figure 6a est une vue de dessus de l'ensemble afficheur totalisateur du compteur, le cadran étant enlevé;

— La figure 6b est une vue en coupe selon la ligne B—B de la figure 6a;

— La figure 6c est une vue en coupe selon la ligne C—C de la figure 6a;

— La figure 6d est une vue de dessus de l'afficheur montrant l'implantation des mobiles du train d'engrenages de l'afficheur;

— La figure 6e est une vue développée du train d'engrenages du totalisateur afficheur selon la ligne E—E de la figure 6d; et

— La figure 7 est une vue développée en coupe selon le demi-cercle VII—VII de la figure 1 illustrante la formation des tourbillons par les nervures.

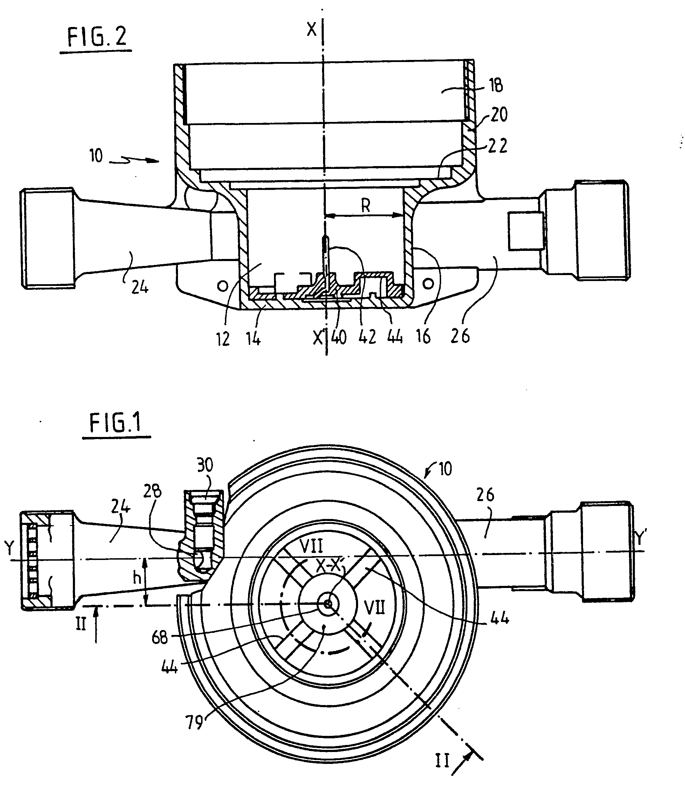

Les figures 1 et 2 montrent l'ensemble du corps d'un compteur à jet unique selon l'invention. Le corps comprend une bâche 10 qui présente une symétrie de révolution autour d'un axe XX'. La bâche 10 définit une partie inférieureycylindrique 12, de diamètre réduit, limitée par un fond 14 et une paroi latérale 16, et une partie supérieure 18 ayant un diamètre supérieur et étant limitée par une paroi latérale 20. Les parois latérales 16 et 20 sont raccordées par un épaulement 22.

Le corps du compteur comprend en outre un injecteur 24 qui débouche dans la partie inférieure 12 et un éjecteur 26 qui débouche également dans la partie inférieure 12. Comme le montre la figure 2, l'injecteur 24 et l'éjecteur 26 présentent un même axe YY' qui est orthogonal à l'axe de révolution XX' de la bâche 10 du compteur. De préférence la distance h entre les axes XX' et YY' est de l'ordre de 0,55 xR, R étant le rayon de la partie inférieure 12. De plus, comme on le voit sur la figure 1, le corps du compteur comporte une conduite de dérivation 28 associée à une vis de réglage 30 qui permet, comme cela est bien connu d'effectuer le réglage final du compteur. Cette partie ne sera donc pas décrite plus en détail.

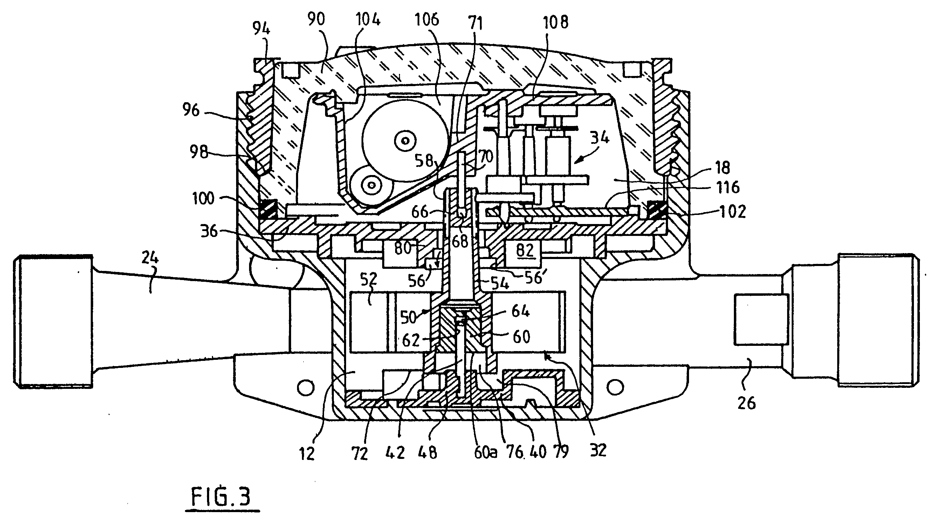

La partie inférieure 12 forme la chambre de mesure du compteur dans laquelle est montée une turbine 32 visible sur la figure 3.

La partie supérieure 18 sert au logement d'un indicateur portant la référence générale 34 sur la figure 3. Comme le montre cette même figure les parties inférieure 12 est supérieure 18 sont séparées de façon non étanche par une cloison 36 disposée dans un plan perpendiculaire à l'axe XX'.

Ainsi que le montrent mieux les figures 1 et 2, le fond 14 de la chambre de mesure 12 est recouvert par une platine 40 s'étendant sur la totalité du fond 14. La platine 40 a une double fonction: elle sert d'une part à la fixation d'un axe de pivotement 42 disposé selon l'axe XX' de la bâche du compteur, et d'autre part à définir des nervures fixes telles que 44 faisant saillie hors de la face principale 46 de la platine 40.

Selon le mode de réalisation préféré, la platine 40 est réalisée en un matériau plastique. La base 42a de l'axe de pivotement 42 est surmoulée dans une portion 48 en suprépaisseur de la platine 40. Les nervures 44 sont au nombre de quatre et disposées selon des rayons décalés angulairement de 90°.

Une première fonction bien connue des nervures 44 est de créer pour la turbine 32, aus débits élevés, un couple de frinage.

Comme le montre la figure 3, la turbine 32 comprend un moyeu 50 sur lequel sont montées des pales droites 52. Le moyeu est prolongé par un arbre 54 qui traverse la cloison 36 par un orifice 56. L'arbre 54 a un diamètre extérieur sensiblement inférieur à celui du moyeu 50. L'extrémité 58 de l'arbre 54 est dentée et engrène avec l'entrée du totalisateur 34 ainsi que cela sera expliqué ultérieurement.

Le fonctionnement global du compteur découle de la description précédente: l'injecteur 34, qui est relié à la conduite amont d'arrivée d'eau, fait entrer dans la chambre de mesure 12 le liquide de telle manière que dans la section droite terminale de l'injecteur le profil des vitesses soit aussi uniform que possible. Dans la chambre de mesure 12 le jet de liquide provoque la rotation de la turbine 32 et l'eau ressort par l'éjecteur 26. La vitesse de rotation de la turbine est proportionnelle à la vitesse du liquide. Le totalisateur 34, entraîné par la turbine 32, permet d'afficher la consommation d'eau.

Cependant, comme on l'a déjà indiqué, il est nécessaire de prevoir un mode particulier de pivotage de la turbine pour que le compteur puisse présenter des qualités métrologiques suffisantes pour qu'il entre dans la classe C, c'est-à-dire dans la classe correspondant à la meilleure qualité de compteur.

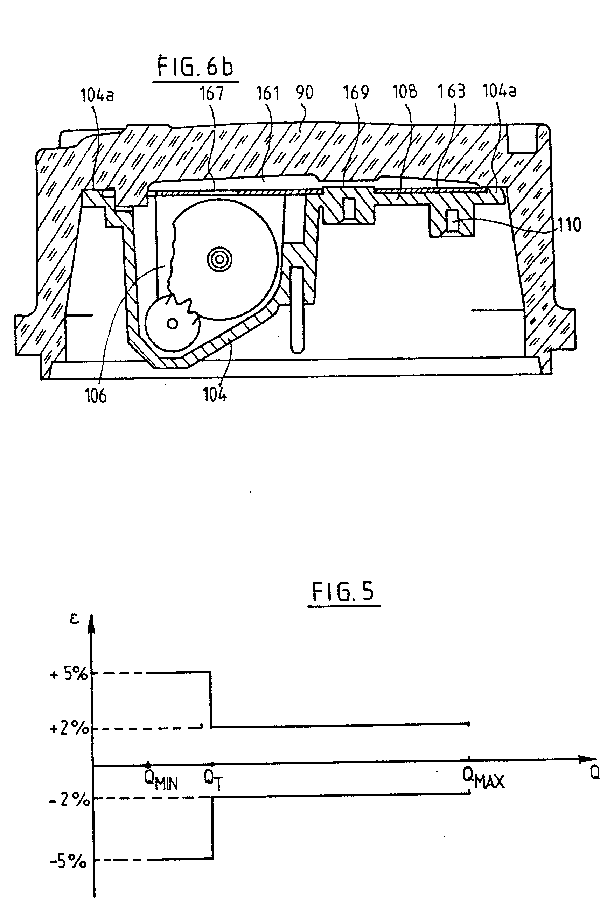

La figure 5 donne les caractéristiques d'étalonnage d'un compteur de classe C de débit nominal

$$Q_N = 1,5 \text{ m}^3/\text{h}$$

En desous de $Q_{min} = 0,01 \times Q_N$ (151/h) aucune sensibilité n'est imposée.

Entre $Q_{min}$ et $Q_T$ non compris

$$(Q_T = 0,015 \times Q_N = 22,51/\text{h})$$

l'erreur maximale de mesure doit être comprise entre +5% et −5%.

Enfin, entre $Q_T$ comprise et $Q_{max}$ ($Q_{max} = 2Q_N = 3$ m³/h) l'erreur maximale de mesure doit être comprise entre +2% et −2%.

On comprend que c'est entre $Q_{min}$ et des valeurs légèrement supérieures à $Q_T$ qu'il est le plus difficile des satisfaire aux conditions imposées tout en restant dans des conditions de fabrication de type industriel.

Si l'on revient à la figure 3, on voit que le moyeu 50 de la turbine 32 ainsi que l'arbre 54 qui le prolonge sont creux. Le moyeu 50 est fermé par un bouchon inférieure 60 percé d'un alésage borgne axial 62 dans lequel pénètre librement le pivot 42. Au fond de l'alésage 62 est chassée une pierre 64 qui peut coopérer avec la pointe 42b du pivot 42. La pierre 64 forme ainsi une butée axiale inférieure pour l'axe de la turbine. De même, l'arbre 54 est fermé par une partie massive supérieure 66 percé d'un alésage borgne axial 68 dans lequel pénètre un axe supérieur 70 solidaire d'un bâti 71 du totalisateur 34. L'axe supérieur 70 et le pivot inférieur 42 sont alignés avec une grande précision sur l'axe XX'. Cette construction de la turbine est telle que le poids apparent de celle-ci immergée dans l'eau soit sensiblement inférieur à 1 gramme. En outre, le centre de poussée est disposé sur l'axe XX'.

La figure 3 montre que le moyeu 50 de la turbine se prolonge au-delà de la face inférieure 60a du bouchon 60 par une collerette 72. La collerette 72 définit ainsi une zone 76 ouverte à son extrémité inférieure. Cette zone 76 a un diamètre intérieur qui est supérieur au diamètre de l'embase 48 du pivot 42. De plus, lorsque la pointe 42b du pivot 42 est au contact de la pierre 64, la face inférieure de la collerette 72 est très légèrement en dessous de la face supérieure de l'embase 48 et des bords supérieures des nervures fixes 44. L'extrémité inférieur de la collerette 72 pénètre ainsi dans une zone annulaire 79 limitée intérieurement par l'embase 48 et extérieurement en partie par les nervures 44. Il existe ainsi pour cette position axiale de la turbine, une section de passage réduite entre la zone 76 et le reste de la chambre de mesure 12.

Si l'on revient à la cloison 36 séparant la chambre de mesure 12 de la chambre de l'indicateur 18, on voit que sa face tournée vers la chambre 12 comporte une portion centrale en surépaisseur 80 dans laquelle est ménagé l'orifice 56. La portion centrale 80 est entourée par des nervures fixes radiales telles que 82. Ainsi, du point de vue hydraulique la chambre de mesure 12 a une structure sensiblement symétrique par rapport à un plan médian perpendiculaire à l'axe XX' et contenant l'axe YY', du fait des ensembles supérieur 82 et inférieur 44 der nervures fixes.

Lorsque la vitesse de rotation de la turbine augmente il tend à se développer un phénomène dépressionnaire aux deux extrémités du moyeu de la turbine autour de son axe de pivotement XX'. En revanche aucun effet dépressionnaire significatif ne se développe audessus de la cloison 36. Cependant, du fait qu'au départ, la collerette 72 pénètre dans l'évidement annulaire 79 le phénomène dépressionnaire n'intéresse que très peu la face inférieure du moyeu, c'est-à-dire la face inférieure du bouchon 60 et de la collerette 72. Au contraire, l'extrémité supérieure du moyeu est soumise à ce phénomène dépressionnaire. Il en résulte un soulèvement de la turbine, la pointe 42a du pivot inférieur 42 n'étant plus au contact de la pierre 64. Au fur et à mesure que la vitesse de rotation de la turbine croît, celle-ci se soulève. Les axes 42 et 70 ne servent plus alors, qu'à guider en rotation la turbine. Comme la turbine se soulève, l'extrémité inférieure de la collerette 72 sort de l'espace annulaire 79. Le phénomène dépressionnaire se met alors à intéresser progressivement la face inférieure du moyeu jusqu'à ce qu'il se développe sur les deux faces d'extrémité du moyeu des phénomènes de siphon de même importance ce qui arrête le mouvement de soulèvement de la turbine, bien que l'extrémité de l'axe supérieur 66 ne soit pas en contact avec le fond de l'alésage borgne 68. Il y a ainsi une régulation du soulèvement de la turbine, ce soulèvement ne dépassant pas une valeur telle que la turbine ne vienne pas encore en butée sur l'extrémité du pivot supérieur. Les essais effectués ont montré que, pour le compteur considéré, ce soulèvement est de l'ordre de 0,7 à 1 mm. En outre, comme le montre la figure 3. l'orifice 56 par lequel passe l'extrémité de l'arbre de la turbine, a une forme en gradin 56' qui donne à l'orifice 56 une forme generale allant en s'évasant vers la chambre de mesure. Cette disposition permet de conserver les qualités métrologiques du compteur malgré le soulèvement de la turbine en agissant sur l'écoulement du liquide entre les chambres 12 et 18.

On voit donc qu'ainsi, pour les vitesses de rotation très réduites, le pivot inférieur est en contact avec la pièce 64 mais que, dès que cette vitesse augmente, le contact est supprimé, ce qui autorise l'utilisation d'un pivot inférieur ayant une pointe très fine et n'entraînant donc qu'un couple de frottement réduit. En revanche, aux vitesses de rotation élevées, il n'y pas de contact entre le moyeu et l'extrémité du pivot supérieur. Il n'est donc pas nécessaire de prévoir une pierre à la partie supérieure du moyeu et le pivot supérieur n'ayant pas à encaisser la poussée axiale, il n'a pas à être particulièrement robuste. Il a seulement pour fonction de guider en rotation la turbine.

Plus généralement, il n'y a pas, comme dans le compteur décrit dans le brevet français 2 336 666, de problème d'endurance du pivot supérieur durant la vie due compteur.

Au lieu de prévoir que les deux pivots soient solidaires du corps du compteur et qu'ils pénètrent dans des alésages axiaux du moyeu de la turbine, il serait possible de prévoir un axe métallique unique traversant le moyeu de la turbine.

Cependant, une telle solution présente le double inconvénient d'augmenter le poids réel de la turbine et de rendre plus difficile l'obtention du poids apparent requis. Les solutions intermédiaires présentent les mêmes inconvénients mais à un degré moindre.

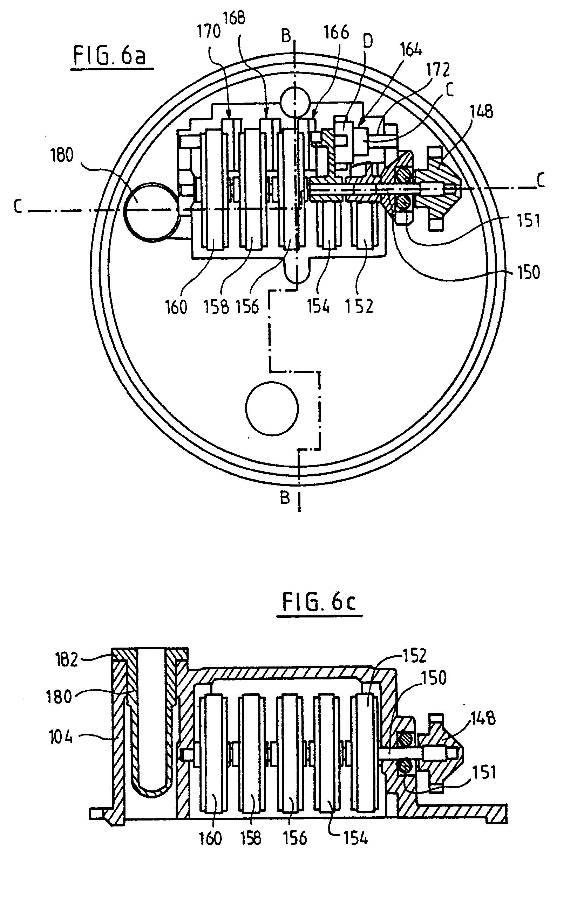

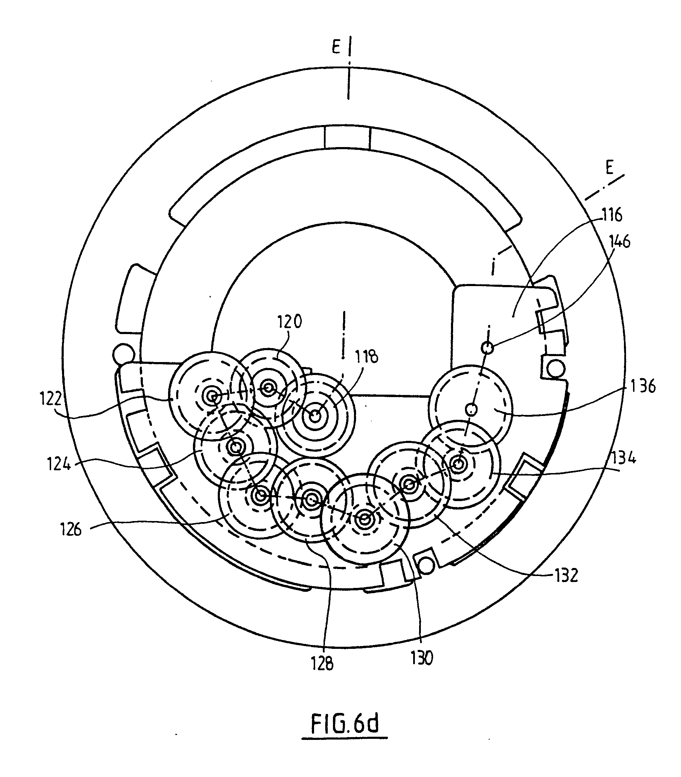

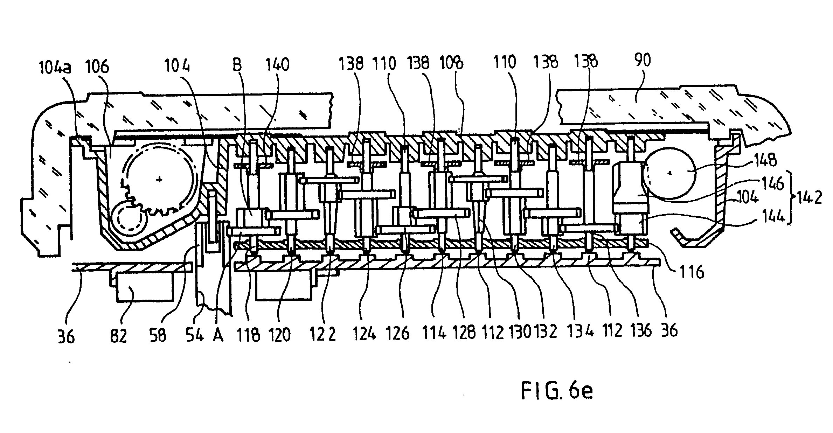

En se référant maintenant aux figures 6a et 6e on va décrire en détail l'indicateur 34 représenté sur la figure 3.

Comme cela est bien connu les indicateurs de compteur d'eau peuvent être de deux types principaux: soit du type sec, c'est-à-dire que les éléments d'affichage de la consommation sont dans un espace étanche vis-à-vis du liquide à mesurer, la transmission entre la turbine et les rouages du totalisateur étant magnétique, soit du type humide, c'est-à-dire que les éléments d'affichage baignent dans le liquide à mesurer.

Dans le compteur selon l'invention l'afficheur analogique des sous-multiples des m³ d'eau est du type humide alors que le totalisateur pour l'affichage des m³ est du type propre c'est-à-dire qu'il est immergé dans un liquide séparé du liquide à mesurer.

Comme le montre la figure 3 l'indicateur 34 est logé dans la partie 18 de la bâche 10. La partie 18 est fermée par un couvercle transparent ou voyant 90. Le voyant 90 est fixé sur la bâche 10 par une bague filetée 94 qui coopère avec un filetage 96 ménagé dans la face interne de la paroi latérale 20 de la bâche. L'extrémité de la bague 94 prend appui sur un épaulement externe 98 du voyant 90. L'étanchéité entre le voyant 90 et la bâche 10 est obtenue par un joint annulaire 100 qui est pincé entre la périphérie de la cloison 36, la partie inférieure de la paroi latérale 20 de la bâche et un épaulement 102 ménagé dans le voyant 90. Dans l'espace limité par la cloison 36 et le couvercle 90, le compteur comporte une pièce 104 qui définit d'une part un logement 106 pour le totalisateur des m³ et d'autre par une platine 108 pour les mobiles de l'ensemble d'affichage des sous-multiples des m³.

La pièce 104 est soudée sur sa périphérie 104a sur la face interne du voyant 90. La région étanche comprise entre le voyant et la pièce 104 est remplie par un liquide transparent.

Les mobiles de l'ensemble d'affichage sont montés d'une part dans des paliers tels que 110 formés par des surépaisseurs de la portion 108 formant platine de la pièce 104 et d'autre part dans des butées axiales telles que 112 formées par des surépaisseurs de la cloison 36 associées à des paliers tels que 114 ménagés dans une platine 116 solidaire de la cloison 36 formant contre-platine. Chaque mobile de l'afficheur qui est constitué par une roue dentée A et un pignon B, est monté entre un palier supérieur 110 et un pallier inférieur 112, 114. Les mobiles sont référencés 118 à 136. La roue A du premier mobile 118 engrène avec l'extrémité dentée de l'arbre 54 de la turbine. Les mobiles 124, 128, 132, et 136 servent respectivement à l'affichage des dixièmes de litre, des litres, des dizaines de litre et des centaines de litres. Pour cela, chacun de ces mobiles comporte un disque 138 muni d'un index. De plus le premier mobile 118 sert de témoin de fonctionnement et il est également muni d'un disque 140 avec un index. Les autres mobiles 120, 122, 126, 130 et 134 sont des mobiles intermédiaires.

Un dernier mobile 142 comporte un premier pignon 144 qui engrène avec la roue dentrée A du mobile 136 et une vis sans fin 146 qui engrène avec un pignon d'entrée 148 du totalisateur à rouleaux. Le pignon 148 est solidaire d'une extrémité d'un arbre 150 du totalisateur. L'arbre 150 traverse de façon étanche, grâce au joint 151, une partie de la pièce 104 limitant le logement 106. Le totalisateur comprend de plus 5 rouleaux d'affichage référencés 152 à 160. Le rouleau 152 est solidaire en rotation de l'arbre 150 alors que les autres rouleaux sont montés fous. La transmission du mouvement d'un rouleau au rouleau suivant est réalisée par quatre rochets référencés 164 à 170 qui sont montés fous sur un deuxième axe 172 parallèle à l'arbre 150. Chaque mobile de renvoi 164 à 170 comprend un premier pignon C qui coopère avec un des rouleaux 152 à 158 et un deuxième pignon D à denture partielle qui coopère avec le rouleau immédiatement suivant parmi les rouleaux 154 à 160, de telle manière qui, lorsqu'un rouleau 152 à 158 a effectué un tour complet, le rouleau suivant 154 à 160 effectue un dixième de tour. Chaque rouleau 152 à 160 porte sur sa tranche les chiffres 0 à 9. Le totalisateur permet d'afficher la consommation cumulée depuis 1 m³ jusqu'à 99 999 m³.

La face de la pièce 104 tournée vers le voyant 90 est recouverte d'un cadre opaque 164 percé de fenêtres 166 et 168 disposées respectivement en regard des rouleaux du totalisateur et des disques 138, 140, des mobiles d'affichage 118, 124, 128, 132, et 136.

Cette structure de totalisateur associée à un calcul très poussé des dentures des différents mobiles permet d'obtenir un afficheur-totalisateur présentant des frottements très réduits.

Il faut encore ajouter que, pour éviter que la pièce 104, qui sépare le logement 106 du totalisateur rempli d'un liquide particulier du reste de la partie 16 de la bâche où pénêtre le liquide à mesurer, ne soit soumise à la différence des pressions de ces deux liquides, il est prévu un doigt de gant déformable 180. Le doigt de gant 180 est fixé de façon étanche sur la pièce 104 par une collerette 182. On réalise ainsi une égalisation des pressions qui règnent de part et d'autre de la pièce 104. De plus, l'espace 161 compris entre le voyant 90 et le cadran 163 est rempli par le liquide transparent. La lecture des informations fournies par les mobiles d'affichage est améliorée par rapport aux modes de réalisations dans lesquels seul le logement du totalisateur proprement dit est isolé du liquide à mesurer.

En se référant à la figure 7 on va décrire un autre aspect de l'invention qui permet également d'améliorer la sensibilité du compteur aux faibles débits.

Il consiste essentiellement à donner aux nervures inférieures 44 et de préférence aussi aux nervures supérieures 82 une disposition et une forme particulière qui permettent pour les faibles débits, d'augmenter la vitesse de l'écoulement laminaire du liquide au voisinage immédiat de la turbine 32 c'est-à-dire dans les zones de la chambre de mesure où le liquide provoque effectivement l'entraînement de la turbine.

Dans les compteurs à jet unique connus il existe un ensemble de nervures rayonnantes solidaires du fond de la chambre de mesure. Ces nervures ont une largeur sensiblement égale à celle des pales de la turbine. Elles servent à créer un couple de freinage sur la turbine aux vitesses de rotation élevées et elles servent également, d'après le brevet français déjà cite, à favoriser le soulèvement de la turbine dans cette même gamme de vitesses. Du fait de la hauteur de ces nervures, la distance entre le fond inférieur des pales de la turbine et le fond effectif de la chambre de mesure, est importante. L'écoulement laminaire qui s'y développe n'a donc pratiquement aucun effet d'entraînement sur le bord inférieur des pales de la turbine pour les faibles débits de liquide.

Pour remédier à cet inconvénient, on donne aux nervures inférieures et de préférence également aux nervures supérieures de la chambre de mesure des dimensions telles qu'elles provoquent la création de tourbillons dans les espaces séparant les nervures.

Sur la figure 7 on a représenté en vue développée la moitié de la partie inférieure de la chambre selon la coupe semi-cylindrique VII de la figure 1. On trouve les nervures 44a, 44b et 44c qui sont séparées par les espaces 200a, 220b. On a également représenté les pales 52a, 52b, 52c de la turbine. Les bords inférieurs 52'a, 52'b, 52'c des pales sont à une distance $a$ du fond de la chambre, c'est-à-dire plus précisément de la face supérieure de la platine. Chaque nervure 44 a une hauteur $b$ et une épaisseur $c$. La distance séparant deux nervures consécutives dans le "plan" de la figure est égale à $d$. Les valeurs de $b$, $c$ et $d$ sont déterminées pour que les nervures développent des phénomènes tourbillonnaires dans une zone Z dite "bouchon hydraulique", pour les débits allant de un peu moins de $Q_{min}$ à un peu plus que $Q_T$ cette zone a une épaisseur selon l'axe XX', $e$ supérieure ou égale à $b$. Le bouchon hydraulique remplit donc au moins partiellement les espaces 200a, 200b. La zone Z' disponible pour l'écoulement laminaire a donc une hauteur a—e qui est inférieure ou égale à la distance séparant le bord inférieur 52' des pales de la turbine de la face supérieure 44' des nervures. Plus généralement la hauteur a—e est au plus égale à cette distance.

La section de passage pour l'écoulement laminaire correspondant à la hauteur a—e est donc réduite en moyenne par rapport à celle que l'on trouve dans des compteurs à jet unique antérieurs ayant par ailleurs les mêmes dimensions de chambre de mesure et de turbine. La vitesse de l'écoulement laminaire est donc augmentée aux faibles débits.

A titre d'exemple, dans le compteur décrit $a$ vaut 10 mm, $b$ vaut 6 mm et $c$ vaut 4 mm.

Plus généralement, si l'on considère un développement d'une section semi-cylindrique de rayon $h$, on doit avoir les relations suivantes pour obtenir effectivement le "bouchon hydraulique":

$$1,3 \leqslant b/c \leqslant 1,6$$
et
$$0,15 \leqslant c/d \leqslant 0,25$$

On retrouve, de préférence, les mêmes dispositions pour les nervures supérieures 82 qui forment un "bouchon hydraulique" au voisinage de la paroi supérieure de la chambre de mesure.

Dans la description précédente la turbine a un poids apparent positif. On ne sortirait pas de l'invention en utilisant une turbine ayant un poids apparent négatif. Dans ce cas, il faudrait inverser les dispositions prévues à la partie supérieure de la chambre de mesure et celles prévues à la partie inférieure. En particulier on aurait alors un "abaissement" de la turbine avec l'augmentation du débit, et l'axe à extrémité effilée serait disposé à proximité de la paroi supérieure de la chambre de mesure.

## Revendications

1. Compteur de liquide à jet unique comprenant:
—une chambre de mesure cylindrique (12) ayant une première et une deuxième (14, 36) paroi d'extrémité perpendiculaire à l'axe de ladite chambre de mesure;
—un injecteur (24) et un éjecteur (26) débouchant dans ladite chambre de mesure;
—une turbine comportant un moyeu (50) et une pluralité de pales (52) solidaires dudit moyeu, ledit moyeu présentant une première et une seconde faces d'extrémité respectivement en regard desdites première et seconde paroi d'extrémité;
—des moyens (42, 62; 70, 68) pour guider en rotation ladite turbine autour de l'axe de ladite chambre de mesure;
—un ensemble formant butée axiale (64, 42) disposé à proximité de ladite première face d'extrémité et formé par un pivot (42) présentant une pointe éffilée (42b) et une butée (64) qui est en contact avec ladite pointe lorsque le débit de liquide est nul;
caractérisé par le fait qu'il comprend en outre:
—un espace annulaire (79) défini par la première paroi d'extrémité de ladite chambre de mesure (12); et

—une collerette (72) solidaire du moyeu (50) et entourant ladite première face d'extrémité et s'étendant au-delà de celle-ci,

ledit espace annulaire (79) et ladite collerette (72) étant adaptés à coopérer pour:

—d'une part, progéger, vis-à-vis de l'effet dépressionnaire produite par la rotation du liquide dans ladite chambre, ladite première face d'extrémité (60a) pour des vitesses réduites de la turbine de telle façon que sous l'effet dépressionnaire auquel est soumis ladite seconde face d'extrémité, la turbine se déplace axialement en supprimant le contact entre ladite pointe (42b) et ladite butée (64); et,

—d'autre part, soumettre audit effet dépressionnaire ladite première face d'extrémité (60a) à partir d'un certain déplacement axial de ladite turbine, par quoi ladite turbine est immobilisée axialement sous l'effet dépressionnaire auquel sont soumises lesdites faces d'extrémité.

2. Compteur selon la revendication 1, caractérisé en ce que ledit pivot (42) est solidaire de la paroi d'extrémité inférieure de ladite chambre et en ce que ladite butée (64) est solidaire du moyeu (50) de ladite turbine (32).

3. Compteur selon la revendication 2, caractérisé en ce que lesdits moyens de guidage en rotation comprennent d'une part un premier alésage borgne axial (62) débouchant dans ladite première face d'extrémité et ledit pivot (42) qui pénètre dans ledit premier alésage axial, et d'autre part un arbre (54) solidaire de ladite deuxième face d'extrémité muni d'un deuxième alésage borgne axial (68) et un axe fixe de pivotement (66).

4. Compteur selon l'une quelconque des revendications 1 à 3, caractérisé en ce qu'il comprend de plus: un ensemble de nervures rayonnantes (44, 82) solidaires de ladite première paroi d'extrémité de la chambre de mesure, lesdites nervures (44) étant aptes à engendrer, pour les faibles débits de liquide à mesurer, des phénomènes de tourbillon dans les espaces (200) séparant lesdites nervures, de telle manière que lesdits phénomènes tourbillonnaires créent un bouchon hydraulique à proximité de ladite paroi d'extrémité pour que la zone laissée libre pour un écoulement laminaire entre la turbine (32) du compteur et ledit bouchon hydraulique ait une longueur, selon la direction dudit axe de rotation, au plus égale à la distance selon la même direction entre lesdites nervures (44) et ladite turbine (32).

5. Compteur selon la revendication 4, caractérisé en ce qu'il comprend de plus un autre ensemble de nervures rayonnantes (82) solidaires de ladite deuxième paroi d'extrémité.

6. Compteur selon la revendication 5, caractérisé en ce que chaque ensemble de nervures (44, 82) en comprend quatre également espacées angulairement.

7. Compteur selon l'une quelconque des revendications 1 à 6, caractérisé en ce qu'il comprend en outre un ensemble indicateur (34) disposé dans une deuxième chambre (18) fermée par un couvercle transparent (90) et communiquant avec ladite première chambre (12) par un orifice (56), ledit indicateur comprenant un totalisateur à rouleaux et une pluralité de mobiles pour relier cinématiquement ladite turbine (32) audit totalisateur, certains desdits mobiles portant des éléments d'affichage, ladite deuxième chambre comprenant une cloison (104) transparente définissant avec ledit couvercle un espace étanche définissant un logement (106) pour ledit totalisateur et une platine pour le pivotement d'une extrémité desdits mobiles, ledit espace étant rempli d'un liquide transparent, ladite cloison (104) comportant un élément déformable (180) pour égaliser les pressions des liquides remplissant respectivement ledit espace et le reste de ladite chambre (18).

**Patentansprüche**

1. Einstrahlflüssigkeitszähler, mit

—einer ersten zylindrischen Meßkammer (12), die eine erste und eine zweite Stirnwand (14 36), die jeweils senkrecht zur Mittelachse der Meßkammer orientiert sind, umfaßt;

—einer Einspritzdüse (24) und einer Ausstoßdüse (26) die jeweils in die Meßkammer einmünden;

—einer Turbine, die eine Nabe (50) und eine Mehrzahl von einteilig mit der Nabe ausgebildeten Schaufeln (52) umfaßt, wobei die Nabe eine erste une eine zweite Stirnseite aufweist, die der ersten bzw. der zweiten Stirnwand gegenüberliegen;

—Mitteln (42, 62; 70, 68) zum Führen der um die Mittelachse der Meßkammer rotierenden Turbine; und

—einer ein axiales Widerlager (64, 62) bildenden Einheit, die in der Nähe der ersten Stirnseite angeordnet ist und von einem ein konisches Ende (42b) aufweisenden Drehzapfen (42) und einem Anschlag (64), der mit dem Ende in Kontakt ist, wenn der Flüssigkeitsdurchsatz null ist, gebildet wird;

dadurch gekennzeichnet, daß er ferner

—einen ringförmigen Raum (79), der durch die erste Stirnwand der Meßkammer (12) definiert wird; und

—einen einteilig mit der Nabe (50) ausgebildeten, die erste Stirnseite einschließenden und sich über diese hinaus erstreckenden Bund (72) umfaßt,

wobei der ringförmige Raum (79) und der Bund (72) so angepaßt sind, daß sie zusammenwirken, um:

—einerseits bei verringerter Umdrehungszahl der Turbine die erste Stirnseite (60a) gegen die Wirkung des durch die Rotation der Flüssigkeit in der Kammer erzeugten Unterdrucks zu schützen, derart, daß sich unter der Wirkung des Unterdrucks, der die zweite Stirnseite unterworfen ist, die Turbine in axialer Richtung verschiebt und dabei den Kontakt zwischen dem Ende (42b) und dem Anschlag aufhebt; und

—andererseits die erste Stirnseite ab einer bestimmten axialen Verschiebung der Turbine der Wirkung des Unterdrucks zu unterwerfen, damit die Turbine unter der Wirkung des Unterdrucks, der die Stirnseiten unterworfen werden, in axialer Richtung unbeweglich wird.

2. Zähler gemäß Anspruch 1, dadurch gekennzeichnet, daß der Drehzapfen (42) einteilig mit der kleineren Stirnwand der Meßkammer ausgebildet ist und daß der Anschlag (64) einteilig mit der Nabe (50) der Turbine (32) ausgebildet ist.

3. Zähler gemäß Anspruch 2, dadurch gekennzeichnet, daß die Mittel zum Führen der Rotation einerseits eine in die erste Stirnseite mündende erste axiale Blindbohrung (62) und den in die erste Bohrung eindringenden Drehzapfen (42) und andererseits eine einteilig mit der zweiten Stirnseite ausgebildete und mit einer zweiten axialen Blindbohrung (68) versehene Welle (54) und eine feste Drehachse (66) umfassen.

4. Zähler gemäß einem der Ansprüche 1 bis 3, dadurch gekennzeichnet, daß der ferner umfaßt: eine Gruppe von einteilig mit der ersten Stirnwand der Meßkammer ausgebildeten radialen Rippen (44, 82), wobei die Rippen dazu geeignet sind, in den die Rippen trennenden Räumen (200) zum Zwecke der Messung geringer Durchsätze Wirbelphänomene zu erzeugen, derart, daß die Wirbelphänomene in der Nähe der Stirnwand einen hydraulischen Stopfen erzeugen, damit die für eine Laminarströmung freigelassene Zone zwischen der Turbine (32) des Zählers und dem hydraulischen Stopfen in Richtung der Rotationsachse eine Länge besitzt, die höchstens gleich dem Abstand zwischen den Rippen (44) und der Turbine (32) in derselben Richtung ist.

5. Zähler gemäß Anspruch 4, dadurch gekennzeichnet, daß er ferner eine andere Gruppe von einteilig mit der zweiten Stirnwand ausgebildeten radialen Rippen (82) umfaßt.

6. Zähler gemäß Anspruch 5, dadurch gekennzeichnet, daß jede Gruppe von Rippen (44, 82) vier in Drehrichtung in gleichem Abstand angeordnete Bereiche umfaßt.

7. Zähler gemäß einem der Ansprüche 1 bis 6, dadurch gekennzeichnet, daß er ferner eine Anzeigeeinheit (34) umfaßt, die in einer von einer durchsichtigen Kappe verschlossenen und mit der ersten Kammer (12) über eine Öffnung (56) in Verbindung stehenden zweiten Kammer (18) angeordnet ist, wobei die Anzeige ein Walzenzählwerk und eine Mehrzahl von Antrieben umfaßt, um die Turbine (32) kinematisch mit dem Zählwerk zu verbinden, wobei bestimmte Antriebe Anzeigeelemente tragen, wobei die zweite Kammer eine durchsichtige Zwischenwand (104), die zusammen mit der Kappe einen einen Aufnahmeraum (106) für das Zählwerk definierenden dichten Raum definiert, und eine Platte für die Drehung eines Endes der Antriebe umfaßt, wobei der Raum mit einer durchsichtigen Flüssigkeit gefüllt ist und wobei die Zwischenwand (104) ein verformbares Element (180) umfaßt, um die Drücke der den Raum bzw. den Rest der Kammer (18) füllenden Flüssigkeiten auszugleichen.

**Claims**

1. A single jet liquid meter comprising:

a cylindrical measuring chamber (12) having first and second end walls (14 and 36) perpendicular to the axis of said measuring chamber;

an injector (24) and an ejector (26) in communication with said measuring chamber;

a turbine having a hub (50) and a plurality of blades (52) fixed to said hub, said hub having first and second end faces disposed opposite said first and second end walls respectively;

means (42, 62; 70, 68) for guiding the said turbine in rotation about the axis of said measuring chamber;

an assembly constituting an axial end stop (64, 42) disposed adjacent said first end face and constituted by a pivot shaft (42) having a tapering point (42b) and an abutment (64) which is in contact with said point when the liquid flow rate is zero;

the meter being characterized in that it further comprises an annular space (79) defined by the first end wall of said measuring chamber (12); and

a collar (72) fixed to the hub (50) and surrounding said first end face and extending beyond it;

said annular space (79) and said collar (72) are adapted to co-operate:

firstly in the protection of said end face (60a) from the reduced pressure phenomenon produced by the rotation of the liquid in said chamber at low turbine speeds, so that under the reduced pressure phenomenon to which said second end face is submitted, the turbine moves axially, thereby eliminating the contact between said point (42b) and said abutment (64); and

secondly, to submit said first end face (60a) to said reduced pressure phenomenon, after a certain axial displacement of said turbine, whereby said turbine is axially locked in place under the reduced pressure effect to which said end faces are submitted.

2. A meter according to claim 1, characterized in that said pivot shaft (42) is fixed to the bottom end wall of said chamber and in that said abutment (64) is fixed to the hub (50) of said turbine (32).

3. A meter according to claim 2, characterised in that said means for guiding the turbine in rotation comprise: firstly a first axial blind bore (62) opening out into said first end face with said first pivot shaft (42) penetrating into said first axial bore; and secondly a shaft (54) fixed to said second end face, said shaft being provided with a second axial blind bore (68) in which a second fixed pivot shaft (66) is received.

4. A meter, according to any one of claims 1 to 3, characterized in that it further comprises: a set of radiating ribs and fins (44, 82) fixed to the first end wall of the measuring chamber said ribs (44) being suitable at low flow rates of the liquid to be measured for generating vortex phenomena in the spaces (200) separating said ribs in such a manner that said vortex phenomena create a hydraulic plug in the vicinity of said first end wall such that the zone left free from laminar flow between the meter turbine (32) and said hydraulic plug extends in the direction of said axis of rotation over a length which is not greater than the distance in the same direction between said ribs (44) and said turbine (32).

5. A meter according to claim 4, characterized in that it further comprises a second set of radiating fins (82) fixed to said second end wall.

6. A meter according to claim 5, characterized in that each set of ribs and fins (44, 82) comprises four ribs which are uniformly angularly spaced.

7. A meter according to any one of claims 1 to 6, characterized in that it further comprises a display assembly (34) disposed in a second chamber (18) which is closed by a transparent cover (90) and which communicates with said first chamber (12) via an orifice (56), said display means comprising a wheeled totalizer and a plurality of moving parts for providing transmission between said turbine (32) and said totalizer, at least some of said moving parts including display marks, said second chamber including a transparent partition (104) defining together with said cover a sealed volume constituting a housing (106) for said totalizer and a plate to which one end of said moving parts is pivoted, said space being filled with a transparent liquid, said partition (104) including a deformable element (180) for equalizing pressures between the liquids filling said space and the remainder of said chamber (18) respectively.

FIG.2

FIG.1

FIG.3

EP 0 170 564 B1

FIG. 7

FIG. 4

## FIG. 6b

## FIG. 5

FIG. 6a

FIG. 6c

FIG.6d

104a 106 104 B 140 138 110 138 108 110 138 138 90

148
146
104 } 142
144

116

36 82 58 54 A 118 120 122 124 126 114 128 112 130 132 134 112 136 36

FIG. 6e

EP 0 170 564 B1